# EUROPEAN PATENT SPECIFICATION

(11) **EP 0 553 109 B1**
(45) Date of publication and mention of the grant of the patent: **10.07.1996**
(21) Application number: 91916246.1
(22) Date of filing: 11.09.1991
(51) Int. Cl.: B63B 43/16, F16L 55/168

(54) **APPARATUS AND METHOD OF SEALING RUPTURED TANKS**
VORRICHTUNG UND VERFAHREN ZUM ABDICHTEN VON LECKGESCHLAGENEN TANKS
APPAREIL ET PROCEDE PERMETTANT DE REPARER DES CITERNES PRESENTANT DES FUITES

(30) Priority: 11.09.1990 AU 2253/90; 07.12.1990 AU 3785/90
(43) Date of publication of application: 04.08.1993
(73) Proprietor: ENVIRONMENTAL EMERGENCY SEALS PTY LIMITED, Blacktown, NSW 2148 (AU)
(72) Inventor: GOULDING, Grahame, James, Bringelly, NSW 2171 (AU)
(74) Representative: Moir, Michael Christopher
(86) International application number: AU9100422
(87) International publication number: WO9204574

(56) References cited:
- AU-A- 1 156 919
- AU-A- 4 501 759
- AU-A- 6 621 787
- GB-A- 926 668
- SU-A- 1 361 414
- US-A- 2 586 640
- US-A- 3 150 690
- US-A- 4 202 379
- US-A- 4 527 500
- US-A- 5 009 179

## Description

### BACKGROUND OF THE INVENTION

The present invention relates to fluid storage and transport tanks, and in particular, to a method and apparatus of sealing rupture leaks and thereby substantially preventing leakage.

A major problem in the storage and transport of fluids, such as gases, volatile liquids or liquids which may cause damage to the environment is that if ruptures or splits occur in the tanks containing the fluid, it has been found that it is very difficult to prevent the leakage of further fluid from the tank. These fluids may then escape from the tank and contaminate ecologically important areas, for example by liquids flowing through drainage systems and thus these areas may be damaged.

This is particularly the case in relation to transport vehicles which are known as road tankers or with sea-going oil tankers. If a tanker is involved in a motor vehicle accident, it has been found that the leakage of the fluids into the environment is not easily prevented. In the case of such accidents, the most prevalant type of rupture is that a split occurs in the tank generally adjacent baffles located in the tank. Known ways of preventing or stopping such leakages is by using wooden pegs to bung the rupture. In many such instances the use of a wooden peg is inappropriate.

Likewise, in fluid storage tanks, if a rupture occurs for any reason, there is no suitable method or apparatus to stem the leakage of the liquid contained in the storage tank.

In the case of sea-going oil tankers there has been in recent times a spate of damaging oil leaks due to ruptured hulls. Damage to the environment is great and there are no satisfactory methods of plugging the leaks.

In patent specification WO86/06039, an apparatus is described which comprises a shape adjustable patching element which is first welded to the tank when repairs are being conducted. A mattress or annular shaped bag is then filled with gas, liquid or solidified material in order that the leak in the tank be sealed. This apparatus is cumbersome to use and is not readily applicable to either road tankers or sea-going oil tanker.

In patent specification WO87/02650, an apparatus is described which includes a vacuum leak sealing pad which uses a vacuum to secure the pad to a tank wall . However, such an apparatus is also cumbersome and difficult to use and is not readily applicable for leaks in road tankers or sea-going oil tankers.

### BRIEF SUMMARY OF THE INVENTION

It is an object of the present invention to provide an apparatus and method of sealing ruptured tanks which substantially overcomes or ameliorates the above-mentioned disadvantages.

According to one aspect of the present invention there is disclosed an apparatus for substantially sealing a rupture in a wall which may have fluid on one side thereof, said apparatus comprising:
a deformable backing plate to substantially conform to the contour of the wall, said backing plate being sized and shaped to surround the rupture being sealed;
a resilient compressible seal fixed to a major surface of said backing plate, said seal having a seal surface sized and shaped to sealingly contact the wall surrounding the rupture to at least substantially seal the rupture when the resilient compressible seal is compressed against the wall;
characterised in that said apparatus further comprises
a plurality of magnets fixed to said backing plate, said magnets being arranged in a pattern to surround the rupture, each of said magnets having an end face to directly contact or be positioned adjacent the wall for magnetic attachment of said apparatus to the wall; and wherein:
when said seal is in an uncompressed condition before attachment of said apparatus to the wall, said seal surface extends beyond said end faces of said magnets; and
when said apparatus is magnetically attached to the wall by direct contact of said end faces with the wall or being positioned adjacent thereto, said backing plate is urged toward the wall by said magnets, to sealingly compress said seal between said backing plate and the wall until said seal surface is coplanar with said exposed magnet faces.

The resilient layer can, for example comprise a bladder filled with gas, eg. air, liquid or material which solidifies in the bladder and the bladder is preferably partly inflated or filled before being applied to the rupture with the amount of inflation being varied, usually increased, after application to the tank.

Another preferred feature is that the backing plate can be constructed of a flexible material having corrugations to provide strength to the plate when the plate is of a large size. The plates have connection means in order that two or more plates can be combined to form a larger sized apparatus when required. The backing plate is preferably provided with a longitudinal clip along each longitudinal edge thereof, which clip can cooperate with a similar clip on another backing plate to hold the two plates together to form a larger apparatus. Preferably also the transverse ends of the backing plate are shaped so as to facilitate abutment of two such plates together. It will be appreciated that larger ruptures can be sealed by joining or abutting a number of such plates together.

The flexible backing plate can be of any suitable flexible, rigid material, for example, aluminum, stainless steel or various types of plastics.

According to a second aspect of the present invention, there is provided a method of sealing a rupture in a fluid storage or transport tank, the method comprising the steps of applying to said tank over the rupture an apparatus comprising a resilient compressible seal fixed to a major surface of said backing plate, said seal having a seal surface sized and shaped to sealingly contact the wall surrounding the rupture to at least substantially seal the rupture when the resilient compressible seal is compressed against the wall, characterised in that said apparatus further comprises a plurality of magnets fixed to said backing plate, said magnets being arranged in a pattern to surround the rupture, each of said magnets having an exposed face to directly contact the wall for magnetic attachment of said apparatus to the wall, and fastening the backing plate to the tank using the plurality of magnets to thereby compress the seal against the rupture to substantially reduce the flow of leaking fluid therefrom.

### BRIEF DESCRIPTION OF THE DRAWINGS

Various embodiments of the present invention will now be described, by way of example, with reference to the drawings, in which:
Fig. 1 is an underside plan view of the apparatus of one preferred embodiment;
Fig. 2 is a side view of the apparatus of Fig. 1;
Fig. 3 is a perspective view of the apparatus of a second embodiment;
Fig. 4 is a side view, similar to that of Fig. 2, of a third embodiment;
Fig. 5 is a side elevational view through a fourth embodiment applied to a storage tank; and
Fig. 6 is a schematic view of a fifth embodiment of an apparatus according to the invention.

The apparatus 1 of the preferred embodiment shown in the drawings includes an aluminium plate 2 onto which a sponge rubber layer 3 is bonded. The sponge rubber layer has an impervious skin 4 which is impervious to the liquids contained in a transport tanker or tank (not illustrated) naturally, the type of impervious skin 4 is selected for each type of liquid which is either stored or transported.

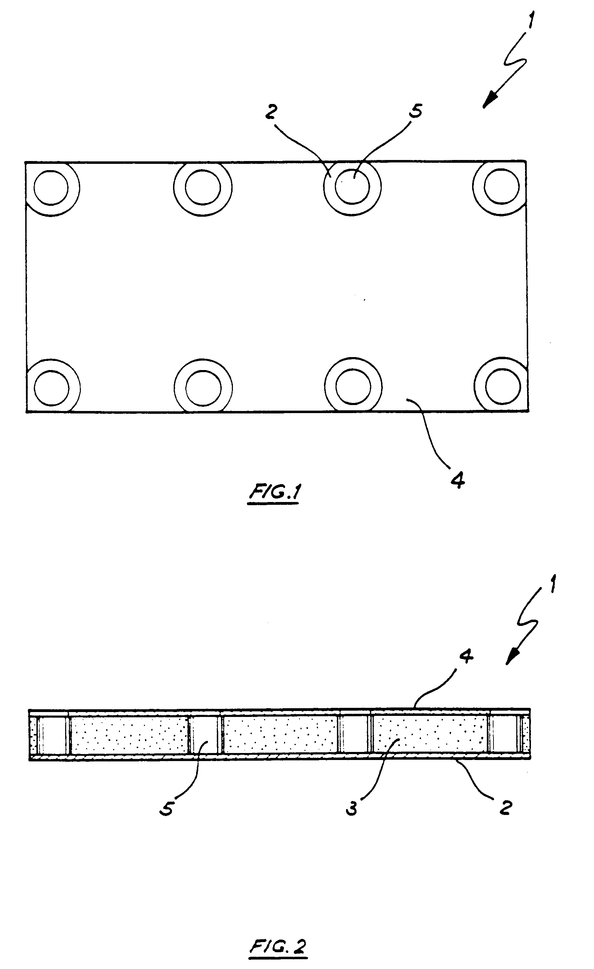

Shown at the periphery of the plate 2 are a set of eight permanent magnets 5 which are also bonded to the aluminium plate. The sponge rubber layer 3 and the impervious skin 4 are both cut out around the each of the magnets 5 to allow the magnets to contact the tank, when applied thereto. As seen in Fig. 2, the height of the permanent magnets 5 is slightly less than that of the sponge rubber layer when the apparatus 1 is not in use.

When a rupture occurs in a tank or transport tanker made of steel or another ferrous material she apparatus 1 is able to be used to stem the flow of the leak. The permanent magnets are fastened to the steel tank and the sponge rubber layer 3 is slightly compressed to thereby substantially seal the rupture. The flexible nature of the aluminium plate 2 allows the apparatus to be bent according to the shape of the tank where the rupture occurred.

The use of the apparatus 1 of the preferred embodiment is used as a patching operation to prevent leakage or spillage of liquids into the environment following the rupture. Naturally, the tank will have to be emptied before major repairs can be made if indeed repairs are able to be carried out.

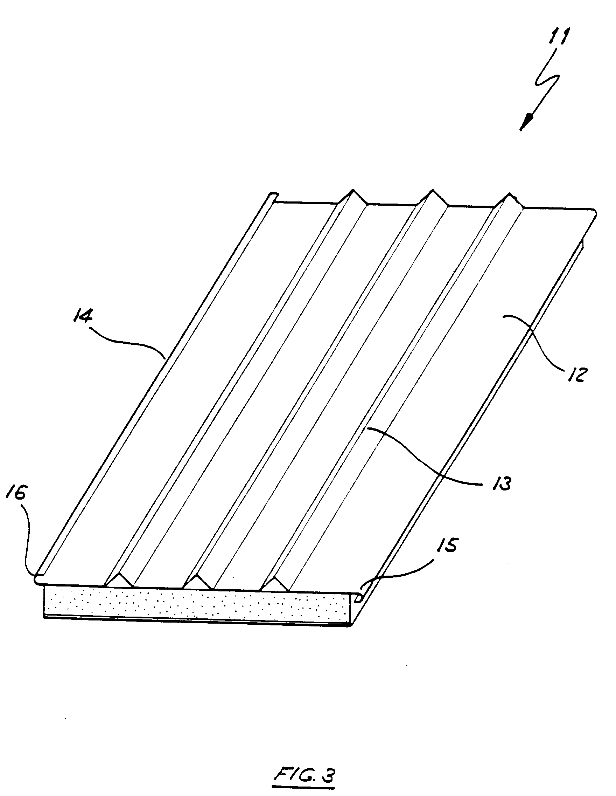

The embodiment illustrated in Fig. 3 includes apparatus 11 which includes a sheet 12 of material with a plurality of corrugations 13 located along the length to provide extra strength. In the drawing the corrugations are illustrated as only one type, obviously different types of corrugations could be used to provide the extra strength and rigidity. Along the peripheries 14 of the longitudinal sides a lip 15 located on one side is able to be clipped into a connection with a clip 16 which is located on the ohter side of another sheet 12. In this way a plurality of sheets 12 can be joined to form a larger apparatus if the rupture is large and not able to be sealed by a since sheet 11.

The permanent magnets and sponge rubber layer are of a similar nature to that of the first described embodiment, and the apparatus 11 is therefore used in a similar manner.

In the case where the apparatus 11 is to be used to seal a leak on a sea-going oil tanker, the apparatus would be placed into the water and applied by underwater divers. The plurality of apparatus are connected prior to being placed in the water but this is not necessarily so.

The embodiment shown in Figure 4 is similar to that of Figures 1 and 2, with similar elements having similar reference numerals. In this embodiment, however, the ends of the backing plate 2, resilient layer 3 and impervious skin 4 are cut in a step-like arrangement 6 across the thickness thereof. In this way two similar apparatus can be easily coupled together in a cooperating manner with one end having a male arrangement and the other end having a female arrangement so that one such apparatus can be easily abutted against another such apparatus end to end. In this way, a larger rupture can be sealed, than a single apparatus could manage. Obviously, although only a stepped male and female arrangement is shown in Figure 4, other designs, such as, for example a tab and recess arrangement, could alternatively be used. Furthermore, although the stepped arrangement has been shown at the ends of the respective apparatus, similar arrangements could be provided at the side edges of the apparatus.

Of course, the resilient layer could be formed of a material inherently impervious to the fluid in the tank to be sealed, so that a separate impervious skin is not required. Furthermore, rather than providing arcuate cutouts in the resilient layer around each magnet 5, the resilient layer could be simply arranged to have a width smaller than the spacing between magnets on opposite sides of the backing plate 2.

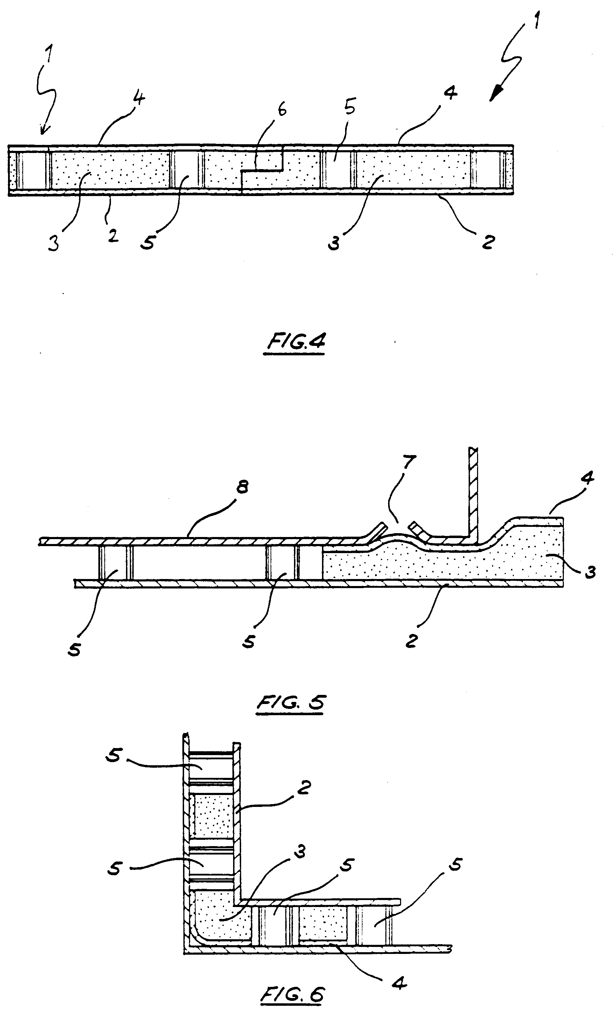

Figure 5 shows an example of an apparatus according to another embodiment of the invention applied to a rupture 7 in a tank 8 close to an edge thereof. In such a case, the embodiments of Figures 1 to 3 could not be easily utilised as the magnets along one edge if the apparatus would not be fastened to the tank. Therefore, this embodiment uses a cantilever arrangement where two, or if necessary more, rows of magnets 5 are arranged side by side attached to the backing plate 2 and the resilient material, for example sponge rubber 3 having an impervious skin 4, is attached to the backing plate along a periphery thereof. This allows the resilient layer to be positioned adjacent the rupture 7 and compressed against the tank 8 by the backing plate 2 when the magnets 5 are fastened to the side of the tank 8.

Finally, in Figure 6 there is shown a still further embodiment of an apparatus according to the invention for sealing ruptures around or very close to internal corners of a tank 8. In this case, the backing plate 2 is bent longitudinally along the centre thereof at an angle appropriate to the angle of the internal corner to be sealed. The magnets 5 and resilient layer are then attached to the outside of the bent backing plate in a similar manner to that described above so that the resilient layer will be compressed into the internal corner of the tank 8 when the magnets are attached thereto.

It will be apparent that alternative configurations of the apparatus can easily be provided in order to seal different configurations of the tank. For example, an apparatus for sealing a rupture at or close to an external corner could be provided similar to that described above, but with the backing plate 2 being bent in the opposite direction.

The foregoing describes only a few embodiments of the present invention, and modifications obvious to those skilled in the art can be made thereto without departing from the scope of the present invention.

For example, the use of permanent magnets 5 as the fastening means to the tank can be replaced by suction devices when the tank Is a non-ferrous material. In the case of an aluminium tank, the suction devices, such as used when handling glass panels can be used. These suction devices use a vacuum to create the fastening.

It is also obvious that the aluminium plate 2 and sponge rubber layer 3 can be replaced by similar materials which carry out the same function. The plate 2 can be made of another similar flexible material in order that the contour of the tank be matched.

It is envisaged that a tanker would carry a number of the apparatus 1 of the present invention in order that the apparatus is able to be used for a number of different type ruptures in the tank.

It is also envisaged that the permanent magnets can be replaced or supplemented by a plurality of electromagnets which can be activated after placing the apparatus against the tanker.

## Claims

1. An apparatus for substantially sealing a rupture in a wall which may have fluid on one side thereof, said apparatus comprising:
a deformable backing plate (2,12) to substantially conform to the contour of the wall, said backing plate being sized and shaped to surround the rupture being sealed;
a resilient compressible seal (3) fixed to a major surface of said backing plate, said seal having a seal surface (4) sized and shaped to sealingly contact the wall surrounding the rupture to at least substantially seal the rupture when the resilient compressible seal is compressed against the wall;
characterised in that said apparatus further comprises
a plurality of magnets (5) fixed to said backing plate (2), said magnets being arranged in a pattern to surround the rupture, each of said magnets having an end face to directly contact or be positioned adjacent the wall for magnetic attachment of said apparatus to the wall; and wherein:
when said seal is in an uncompressed condition before attachment of said apparatus to the wall, said seal surface extends beyond said end faces of said magnets (5); and
when said apparatus is magnetically attached to the wall by direct contact of said end faces with the wall or being positioned adjacent thereto, said backing plate is urged toward the wall by said magnets, to sealingly compress said seal (3) between said backing plate and the wall until said seal surface (4) is coplanar with said exposed magnet faces.

2. An apparatus according to Claim 1, wherein the resilient compressible seal (3) comprises a bladder filled with gas, liquid or material which solidifies in the bladder.

3. An apparatus according to Claim 2, wherein the bladder is partly inflated or filled before being applied to the rupture and the amount of inflation is varied after application to the tank.

4. An apparatus according to Claim 1, 2 or 3, wherein the backing plate (12) is constructed of a material having corrugation to provide strength to the plate when the plate is of large size.

5. An apparatus according to any preceding claim, wherein the backing plate (2,12) is provided with connection means (6,15,16) in order that two or more plates can be combined to form a larger sized apparatus when required.

6. An apparatus according to Claim 5, wherein the backing plate (12) is provided with a longitudinal clip (15) along each longitudinal edge thereof, which clip can cooperate with a similar clip (16) on another backing plate to hold the two plates together to form a larger apparatus.

7. An apparatus according to either Claim 5 or Claim 6, wherein the ends (16) of the backing plate (2) are shaped so as to facilitate abutment of two such plates together.

8. An apparatus according to any preceding claim, wherein the backing plate (2,12) is of aluminium, stainless steel or plastics material.

9. An apparatus for sealing ruptures in fluid storage or transport tanks comprising a plurality of the apparatus according to any preceding claim joined together to form a larger apparatus for sealing larger ruptures

10. A method of sealing a rupture in a fluid storage or transport tank, the method comprising the steps of applying to said tank over the rupture an apparatus according to any preceding claim, and fastening the backing plate to the tank using the plurality of magnets (5) to thereby compress the seal (3) against the rupture to substantially reduce the flow of leaking fluid therefrom.

## Patentansprüche

1. Vorrichtung zum im wesentlichen Abdichten eines Risses in einer Wand, auf deren einer Seite ein Fluid vorhanden sein kann, wobei die Vorrichtung aufweist:
- eine verformbare Rückenplatte (2,12), die sich der Kontur der Wand im wesentlichen anpaßt, wobei die Rückenplatte derart bemessen und geformt ist, daß sie den abgedichteten Riß umgibt;
- eine elastische zusammendrückbare Dichtung (3), die an einer Hauptfläche der Rückenplatte befestigt ist, wobei die Dichtung eine Dichtfläche (4) aufweist, die derart bemessen und geformt ist, daß sie an der den Riß umgebenden Wand abdichtend anliegt, um den Riß wenigstens im wesentlichen abzudichten, wenn die elastische zusammendrückbare Dichtung gegen die Wand gedrückt ist;
dadurch gekennzeichnet, daß die Vorrichtung ferner aufweist:
- mehrere an der Rückenplatte (2) befestigte Magnete (5), die in einem derartigen Muster angeordnet sind, daß sie den Riß umgeben, wobei jeder der Magnete eine zur magnetischen Befestigung der Vorrichtung an der Wand in direktem Kontakt mit oder in der Nähe der Wand angeordnete Stirnfläche aufweist; und wobei:
- wenn die Dichtung vor der Befestigung der Vorrichtung an der Wand im nicht zusammengedruckten Zustand ist, die Dichtfläche über die Stirnflächen der Magnete (5) hinaus vorsteht; und
- wenn die Vorrichtung durch direkten Kontakt der Stirnflächen mit der Wand oder durch Anordnen derselben in deren Nähe magnetisch an der Wand befestigt ist, die Rückenplatte von den Magneten in Richtung auf die Wand gezogen wird, um die Dichtung (3) zwischen der Rückenplatte und der Wand dichtend zusammenzudrücken, bis die Dichtfläche (4) koplanar mit den freiliegenden Magnetflächen ist.

2. Vorrichtung nach Anspruch 1, bei der die elastische zusammendrückbare Dichtung (3) einen mit Gas, Flüssigkeit oder einem sich in dem Balg verfestigenden Material gefüllten Balg aufweist.

3. Vorrichtung nach Anspruch 2, bei der der Balg teilweise aufgeblasen oder gefüllt wird, bevor er auf den Riß aufgebracht wird, und das Ausmaß des Aufblasens nach dem Anbringen an dem Tank verändert wird.

4. Vorrichtung nach Anspruch 1, 2 oder 3, bei der die Rückenplatte (12) aus einem Material besteht, das mit Wellen versehen ist, um der Platte bei einer großformatigen Platte Festigkeit zu verleihen.

5. Vorrichtung nach einem der vorhergehenden Ansprüche, bei der die Rückenplatte (2, 12) mit Verbindungseinrichtungen (6, 15, 16) versehen ist, die nötigenfalls das Verbinden zweier oder mehrerer Platten zur Bildung einer größeren Vorrichtung ermöglichen.

6. Vorrichtung nach Anspruch 5, bei der die Rückenplatte (12) an jeder Langskante mit einem längsgerichteten Clip (15) versehen ist, der mit einem ähnlichen Clip (16) einer anderen Rückenplatte zusammenwirken kann, um die beiden Platten zur Bildung einer größeren Vorrichtung zusammenzuhalten.

7. Vorrichtung nach einem der Ansprüche 5 oder 6, bei der die Enden (16) der Rückenplatte (2) derart geformt sind, daß sie das Aneinanderlegen zweier solcher Platten erleichtern.

8. Vorrichtung nach einem der vorhergehenden Ansprüche, bei der die Rückenplatte (2, 12) aus Aluminium, Edelstahl oder Kunststoffmaterial besteht.

9. Vorrichtung zum Abdichten von Rissen in Fluid-Lager- oder -Transporttanks, mit mehrerem der Vorrichtungen nach einem der vorhergehenden Ansprüche, die zur Bildung einer größeren Vorrichtung für das Abdichten größerer Risse miteinander verbunden sind.

10. Verfahren zum Abdichten eines Risses in einem Fluid-Lager- oder -Transporttank. Mit den Schritten des Aufbringen einer Vorrichtung nach einem der vorhergehenden Ansprüche über dem Riß an dem Tank und Befestigen der Rückenplatte an dem Tank unter Verwendung der mehreren Magnete (5), um so die Dichtung (3) gegen den Riß zu drücken, um das Fließen des austretenden Fluids in erheblichem Maße zu reduzieren.

## Revendications

1. Un dispositif pour étancher substantiellement une rupture dans une paroi, qui peut avoir du fluide sur un de ses côtés, ledit dispositif comprenant :
une plaque arrière (2, 12) déformable, afin de se conformer substantiellement au contour de la paroi, ladite plaque arrière étant dimensionnée et conformée afin d'entourer la rupture devant être étanchée ;
un élément d'étanchéité (3) compressible, élastique, fixé à une surface majeure de ladite plaque arrière, ledit élément d'étanchéité ayant une surface (4) d'étanchéité dimensionnée et conformée afin de venir en contact de façon étanche avec la paroi entourant la rupture, afin d'étancher au moins substantiellement la rupture, lorsque l'élément d'étanchéité compressible, élastique, est comprimé contre la paroi ;
caractérisé en ce que ledit dispositif comprend de plus :
une pluralité d'aimants (5) fixés à ladite plaque arrière (2), lesdits aimants étant agencés dans un motif, afin d'entourer la rupture, chacun desdits aimants ayant une face d'extrémité à mettre en contact direct avec la paroi, ou devant être positionnée adjacente à la paroi, pour liaison magnétique dudit dispositif à la paroi ; et dans lequel :
lorsque ledit élément d'étanchéité est dans une condition non comprimée, avant liaison dudit dispositif à la paroi, ladite surface d'élément d'étanchéité s'étend au-delà desdites faces d'extrémité desdits éléments (5) ; et
lorsque ledit dispositif est lié magnétiquement à la paroi, par contact direct desdites faces d'extrémité avec la paroi, ou qu'il est positionné adjacent à celle-ci, ladite plaque arrière est poussée vers la paroi par lesdits aimants, afin de comprimer en assurant l'étanchéité ledit élément d'étanchéité (3) entre ladite plaque arrière et la paroi, jusqu'à ce que ladite surface (4) d'élément d'étanchéité soit coplanaire avec lesdites faces d'aimant exposées.

2. Un dispositif selon la revendication 1, dans lequel, l'élément d'étanchéité (3) compressible, élastique, comprend une vessie remplie avec du gaz, du liquide ou un matériau, qui se solidifie dans la vessie.

3. Un dispositif selon la revendication 2, dans lequel, la vessie est partiellement gonflée, ou remplie, avant d'être appliquée à la rupture, et l'importance du gonflage est variée après application à la cuve.

4. Un dispositif selon la revendication 1, la revendication 2 ou la revendication 3, dans lequel, la plaque arrière (12) est construite en un matériau ayant des nervures de renforcement afin de procurer de la résistance mécanique à la plaque, lorsque la plaque est de grande dimension.

5. Un dispositif selon une quelconque précédentes revendications, dans lequel, la plaque arrière (2, 12) est pourvue de moyens (6, 15, 16) de liaison, de façon à ce que deux plaques, ou davantage, puissent être combinées afin de former un dispositif de plus grande dimension, lorsque cela est requis.

6. Un dispositif selon la revendication 5, dans lequel, la plaque arrière (12) est pourvue d'une partie d'agrippement (15) longitudinale le long de chaque bord longitudinal de celle-ci, laquelle partie d'agrippement peut coopérer avec une partie d'agrippement (similaire) située sur une autre plaque arrière, afin de maintenir les deux plaques ensemble afin de former un dispositif plus grand.

7. Un dispositif selon, soit la revendication 5, soit la revendication 6, dans lequel, les extrémités (7) de la plaque arrière (2) sont conformées afin de faciliter une venue en butée ensemble de deux telles plaques.

8. Un dispositif selon une quelconque précédente revendication, dans lequel, la plaque arrière (2, 12) est en aluminium, en acier inoxydable ou en matière plastique.

9. Un dispositif pour étancher des ruptures dans des citernes de stockage ou de transport de fluides, comprenant une pluralité des dispositifs selon une quelconque précédente revendication, joints ensemble afin de former un dispositif plus grand, pour étancher des ruptures plus grandes.

10. Un procédé d'étanchement d'une rupture dans une citerne d'emmagasinage ou de transport de fluide, le procédé comprenant les étapes d'application à ladite citerne, au-dessus de la rupture, d'un dispositif selon une quelconque précédente revendication, et de fixation de la plaque arrière à la citerne en utilisant la pluralité d'aimants (5), afin, par ce moyen, de comprimer l'élément d'étanchéité (3) contre la rupture, afin de réduire substantiellement l'écoulement de fluide de fuite à partir de celle-ci.
